# EUROPÄISCHE PATENTSCHRIFT

(11) **EP 3 953 203 B1**
(45) Veröffentlichungstag und Bekanntmachung des Hinweises auf die Patenterteilung: **14.06.2023**
(21) Anmeldenummer: 20712529.5
(22) Anmeldetag: 17.03.2020
(51) Int. Cl.: B60K 7/00, F16H 3/00, B60K 1/02

(54) **FAHRZEUGACHSE FÜR EIN KRAFTFAHRZEUG**
VEHICLE AXLE FOR A MOTOR VEHICLE
ESSIEU DE VÉHICULE AUTOMOBILE

(30) Priorität: 08.04.2019 DE 102019109159
(43) Veröffentlichungstag der Anmeldung: 16.02.2022
(73) Patentinhaber: MAN Truck & Bus SE, 80995 München (DE)
(72) Erfinder: WEBER, Maximilian, 80995 München (DE); REITER, Thomas, 80995 München (DE); TRAYTEL, Larysa, 80995 München (DE); MOSER, Klaus Johann, 80995 München (DE); WÖRMANN, Peter, 80995 München (DE); ZORNEK, Bernd, 80995 München (DE)
(74) Vertreter: v. Bezold & Partner Patentanwälte - PartG mbB
(86) Internationale Anmeldenummer: PCT/EP2020/057319
(87) Internationale Veröffentlichungsnummer: WO 2020/207723

(56) Entgegenhaltungen:
- CN-A- 105 947 015
- CN-B- 105 946 548
- DE-A1- 4 434 237
- DE-B3-102015 012 539

## Beschreibung

Die Erfindung betrifft eine Fahrzeugachse für ein Kraftfahrzeug, vorzugsweise ein Nutzfahrzeug.

Bei der Elektrifizierung von Antriebsträngen für Kraftfahrzeuge können neue Konzepte zur Anordnung der elektrischen Antriebseinheiten vorgesehen werden. Beispielsweise können eine oder mehrere elektrische Antriebseinheiten direkt in einer Fahrzeugachse des Kraftfahrzeugs integriert sein.

Die DE 10 2010 010 438 A1 offenbart ein Fahrwerk für ein Kraftfahrzeug, mit einer elektrischen Achse, die zwei elektrische Maschinen aufweist. Im Bereich der Enden der elektrischen Achse ist jeweils ein Rad drehbar gelagert. Jedes Rad ist mittels der diesen zugeordneten elektrischen Maschine und einem zwischengeschalteten Untersetzungsgetriebe antreibbar. Das jeweilige Untersetzungsgetriebe ist über eine Gelenkwelle an das diesem Untersetzungsgetriebe zugeordnete Rad angebunden. Die jeweiligen Rotationsachsen der beiden elektrischen Maschinen sind parallel nebeneinander angeordnet. Die elektrischen Maschinen können sich überlappen.

Die US 5,743,347 A offenbart einen Rasentraktor, der über zwei unabhängige Elektromotoren für beide Antriebsräder verfügt. Die Motoren sind mit Untersetzungsgetrieben kombiniert, und das jeweilige Antriebsrad ist auf der Abtriebswelle des Getriebes montiert. Beide Elektromotoren sind nebeneinander auf dem Chassis montiert, wobei die Motoren in Längsrichtung des Rasentraktors gesehen überlappend montiert werden können.

Die CN 105947015 A offenbart einen Antriebsmechanismus, der eine Antriebsbasis und an den beiden Enden der Antriebsbasis angeordnete Befestigungsplatten umfasst. An den Befestigungsplatten sind Antriebsvorrichtungen angeordnet. Ein Einstellmechanismus ist in der Position jeder Antriebsvorrichtung angeordnet. Eine Puffervorrichtung für die Antriebswelle ist auf der Antriebsbasis angeordnet. Der Antriebsmechanismus umfasst zwei unabhängige Antriebsvorrichtungen. Durch ein Verfahren zur Verringerung des Abstands zwischen zwei Rädern wird die Differenzialgeschwindigkeit der beiden Räder mit einem großen Abstand in die Differenzialgeschwindigkeit einer Vielzahl von Radsätzen mit einem kleinen Abstand zwischen jeweils zwei Rädern aufgeteilt.

Die CN 105946548 B offenbart eine automatische Führungs-Transportvorrichtung, die einen Fahrzeugrahmen, Antriebsmechanismen, Transportmechanismen, einen Koordinatenerkennungsmechanismus und ein Steuersystem umfasst. Die Antriebsmechanismen befinden sich an den beiden Enden des Fahrzeugrahmens. Jeder Antriebsmechanismus umfasst zwei parallele Antriebsräder, und jedes Antriebsrad wird von einem unabhängigen Antriebsteil angetrieben, um sich unabhängig positiv oder rückwärts zu drehen. Die beiden Antriebsräder jedes Antriebsmechanismus sind auf dem Fahrzeugrahmen in einem insgesamt drehbaren Modus montiert, und die rotierende Mittellinie von jedem der beiden Antriebsräder ist senkrecht zur Verbindungslinie der Mittelpunkte der beiden Antriebsräder. Wenn sich alle zwei Antriebsräder in dieselbe Richtung drehen, bewegt sich der entsprechende Antriebsmechanismus vorwärts, und wenn sich alle zwei Antriebsräder in entgegengesetzte Richtungen drehen, dreht sich der entsprechende Antriebsmechanismus an Ort und Stelle um. Dementsprechend können sich die Antriebsmechanismen der Tragevorrichtung unter der Kontrolle des Steuersystems in jede beliebige Richtung drehen, d. h., die Tragevorrichtung kann sich frei in jede Richtung bewegen.

Aus dem Stand der Technik ist es somit bereits prinzipiell bekannt, eine Fahrzeugachse mit einer parallelen und überlappenden Anordnung von Antriebsmaschinen vorzusehen. Es besteht daher ein Bedarf an einem Konzept zur praktischen und flexiblen Implementation dieses Konzeptes.

Der Erfindung liegt die Aufgabe zu Grunde, eine alternative und/oder verbesserte Fahrzeugachse mit zwei Antriebseinheiten zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Fahrzeugachse (z.B. Fahrzeugstarrachse) für ein Kraftfahrzeug, vorzugsweise ein Nutzfahrzeug. Die Fahrzeugachse weist einen Achskörper mit einer (geometrischen) Längsachse auf. Die Fahrzeugachse weist einen ersten Ausleger auf, der mit dem Achskörper (z.B. direkt) verbunden ist (z.B. lösbar oder unlösbar) und sich angewinkelt, vorzugsweise quer (z.B. im 90° Winkel), zu der Längsachse des Achskörpers weg von dem Achskörper erstreckt. Die Fahrzeugachse weist einen zweiten Ausleger auf, der mit dem Achskörper (z.B. direkt) verbunden ist (z.B. lösbar oder unlösbar) und sich angewinkelt, vorzugsweise quer (z.B. im 90° Winkel), zu der Längsachse des Achskörpers weg von dem Achskörper erstreckt (z.B. entgegengesetzt zum ersten Ausleger). Die Fahrzeugachse weist eine erste, vorzugsweise elektrische, Antriebseinheit auf, die stirnseitig an dem ersten Ausleger angebracht ist. Die Fahrzeugachse weist eine zweite, vorzugsweise elektrische, Antriebseinheit auf, die stirnseitig an dem zweiten Ausleger angebracht ist. Die erste Antriebseinheit und die zweite Antriebseinheit sind bezüglich der Längsachse des Achskörpers überlappend (zumindest teilweise überdeckend) und zumindest annähernd achsparallel zueinander und zu der Längsachse des Achskörpers angeordnet.

Zweckmäßig wird mit der Fahrzeugachse gemäß der vorliegenden Offenbarung ein Konzept zur praktischen und flexiblen Implementation einer vorzugsweise elektrisch angetriebenen Fahrzeugachse geschaffen. Die stirnseitige Anbringung der Antriebseinheiten an den Auslegern kann ermöglichen, dass flexibel Antriebseinheiten unterschiedlicher Längen und Leistungsklassen verwendet werden können. Es ist zudem möglich, die Ausleger je nach Anforderung mit dem Achskörper lösbar (zum Beispiel mittels Verschraubung) oder unlösbar (zum Beispiel mittels Verschweißen oder Verkleben) zu verbinden. Dies wiederum kann ermöglichen, dass die Antriebseinheiten auf einer gewünschten Höhe bezüglich des Achskörpers angeordnet werden können. Beispielsweise können die Ausleger so angeordnet sein, dass beide Ausleger und beide Antriebseinheiten nach oben über den Achskörper überstehen, um beispielsweise eine größere Bodenfreiheit zu ermöglichen. Die Ausleger können auch so angeordnet sein, dass beide Ausleger und die Antriebseinheiten nach unten über den Achskörper überstehen, um beispielsweise ein Niederflur-Kraftfahrzeug zu ermöglichen. Je nach Anforderung kann auch ein Ausleger mit der zugeordneten Antriebseinheit nach oben über den Achskörper überstehen und ein Ausleger mit der zugeordneten Antriebseinheit nach unten über den Achskörper überstehen. Die Fahrzeugachse kann zudem modular aufgebaut sein, sodass insbesondere eine Verwendung mit unterschiedlichen Anbindungssystemen an das Fahrzeugchassis, unterschiedlichen Bremssystemen und unterschiedlichen Radnaben ermöglicht wird.

Es ist möglich, dass der erste Ausleger und/oder der zweite Ausleger außermittig bezüglich des Achskörpers angeordnet sind. Der erste Ausleger und der zweite Ausleger können bezüglich der Längsachse des Achskörpers beabstandet voneinander angeordnet sein. Der erste Ausleger und der zweite Ausleger können bezüglich einer Umfangsrichtung um die Längsachse des Achskörpers voneinander beabstandet angeordnet sein. Der erste Ausleger und der zweite Ausleger können auf einander gegenüberliegenden Seiten bezüglich des Achskörpers angeordnet sein.

In einem Ausführungsbeispiel ist die erste Antriebseinheit nur oder im Wesentlichen nur von dem ersten Ausleger getragen. Alternativ oder zusätzlich ist die zweite Antriebseinheit nur oder im Wesentlichen nur von dem zweiten Ausleger getragen. Dies kann insbesondere ermöglichen, dass auf einer dem jeweiligen Ausleger entgegengesetzten Seite der Antriebseinheit keine feste Tragstruktur des Antriebskörpers angeordnet werden muss. Dies kann die Gestaltungsfreiheit hinsichtlich unterschiedlich langer Antriebseinheiten mit unterschiedlichen Leistungsklassen weiter erhöhen.

In einem weiteren Ausführungsbeispiel weist die Fahrzeugachse ferner eine erste, vorzugsweise starre oder in mehreren (z.B. zwei) Gängen schaltbare, Getriebeeinheit (z.B. Reduziergetriebeeinheit) auf. Die erste Getriebeeinheit kann trieblich mit der ersten Antriebseinheit verbunden sein, stirnseitig an dem ersten Ausleger gegenüberliegend zu der ersten Antriebseinheit angebracht sein und/oder einen Abtrieb koaxial mit der Längsachse des Achskörpers aufweisen. Vorzugsweise ist die erste Getriebeeinheit nur oder im Wesentlichen nur von dem ersten Ausleger getragen. Es ist möglich, dass die Fahrzeugachse ferner eine zweite, vorzugsweise starre oder in mehreren (z.B. zwei) Gängen schaltbare, Getriebeeinheit (z.B. Reduziergetriebeeinheit) aufweist. Die zweite Getriebeeinheit kann trieblich mit der zweiten Antriebseinheit verbunden sein, stirnseitig an dem zweiten Ausleger gegenüberliegend zu der zweiten Antriebseinheit angebracht sein und/oder einen Abtrieb koaxial mit der Längsachse des Achskörpers aufweisen. Vorzugsweise ist die zweite Getriebeeinheit nur oder im Wesentlichen nur von dem zweiten Ausleger getragen. Damit kann ähnlich zu der Flexibilität bezüglich der Wahl der ersten und zweiten Antriebseinheit ebenfalls eine gewisse Flexibilität bezüglich der Auswahl der ersten und zweiten Getriebeeinheit bestehen, insbesondere hinsichtlich einer Größe, einer Schaltbarkeit und einer gewünschten Übersetzung der Getriebeeinheiten.

Zweckmäßig kann die erste Getriebeeinheit und/oder die zweite Getriebeeinheit als ein Stirnradgetriebe ausgeführt sein.

In einem weiteren Ausführungsbeispiel weist die erste Getriebeeinheit und/oder die zweite Getriebeeinheit eine schaltbare Kupplung auf. Die schaltbare Kupplung kann zum Schalten der Gänge der jeweiligen Getriebeeinheit und/oder zum selektiven trieblichen Verbinden der Antriebseinheiten mit Radwellen der Fahrzeugachse angeordnet sein.

In einer Ausführungsform weist der erste Ausleger und/oder der zweite Ausleger ein Durchgangsloch zur Durchführung einer Abtriebswelle der jeweils getragenen Antriebseinheit auf. Der Abtrieb der Antriebseinheiten kann somit geschützt und auf einfache Weise direkt durch die Ausleger hindurch erfolgen.

In einer weiteren Ausführungsform ist der erste Ausleger und/oder der zweite Ausleger im Wesentlichen plattenförmig ausgebildet, vorzugsweise mit einer Außenkontur, die an eine Außenkontur der jeweils getragenen Antriebseinheit angepasst ist, besonders bevorzugt mit einer abgerundeten und/oder kreisbogenförmigen Außenkontur. Damit kann der jeweilige Ausleger an die räumliche Dimensionierung der zugeordneten Antriebseinheit angepasst sein, um beispielsweise eine sichere Montage und eine Schutzfunktion zu ermöglichen. Ferner können die Ausleger so auf einfache Weise als Anbringungspunkte für eine Schutzhaube für die Antriebseinheit(en) dienen.

Gemäß der Erfindung weist der Achskörper einen Mittelteil auf, mit dem der erste Ausleger und der zweite Ausleger (z.B. direkt) verbunden sind (zum Beispiel lösbar oder unlösbar). Vorzugsweise kann der Mittelteil im Wesentlichen rahmenförmig, vorzugsweise rechteckrahmenförmig, sein. Es ist möglich, dass der Mittelteil als ein offenes Gestell ausgebildet ist. Es ist möglich, dass der Mittelteil als eine Gusskonstruktion, eine Schmiedekonstruktion, eine Klebekonstruktion, eine Schweißkonstruktion oder eine mittels additivem Fertigungsverfahrens hergestellte Konstruktion ausgeführt ist. Der Mittelteil kann so die notwendige Steifigkeit und Tragfähigkeit zum Abstützen der Antriebseinheiten und zum Anbringen der Fahrzeugachse an ein Fahrzeugchassis aufweisen. Zusätzlich kann durch die Rahmenform Bauraum innerhalb des Mittelteils geschaffen werden, um wiederum flexibel unterschiedlich große Antriebseinheiten und Getriebeeinheiten verwenden zu können.

In einer Weiterbildung weist der Mittelteil einen oberen, vorzugsweise im Wesentlichen plattenförmigen, Träger, und/oder einen unteren, vorzugsweise im Wesentlichen plattenförmigen, Träger auf. Alternativ oder zusätzlich weist der Mittelteil einen ersten, vorzugsweise im Wesentlichen plattenförmigen, Verbindungsträger, der den oberen Träger und unteren Träger miteinander verbindet, und/oder einen zweiten, vorzugsweise im Wesentlichen plattenförmigen, Verbindungsträger, der den oberen Träger und unteren Träger miteinander verbindet, auf. Vorzugsweise sind der obere Träger und der untere Träger zwischen dem ersten Verbindungsträger und zweiten Verbindungsträger angeordnet sind.

Es ist möglich, dass der obere Träger (zum Beispiel direkt) oberhalb des unteren Trägers und beabstandet zu dem unteren Träger angeordnet ist.

Zweckmäßig können der obere Träger und der untere Träger parallel zu der Längsachse des Achskörpers verlaufen.

Vorzugsweise können der erste Verbindungsträger und der zweite Verbindungsträger jeweils in einer Vertikalebene ausgerichtet sein.

In einer Weiterbildung sind der erste Ausleger und der zweite Ausleger (z.B. direkt) mit dem oberen Träger und dem unteren Träger verbunden (zum Beispiel lösbar oder unlösbar). Damit können die Ausleger sicher an dem Mittelteil abgestützt sein.

In einer Ausführungsvariante sind der erste Ausleger und der zweite Ausleger beabstandet zu dem ersten Verbindungsträger und dem zweiten Verbindungsträger angeordnet. Vorzugsweise ist der erste Ausleger näher an dem ersten Verbindungsträger angeordnet als an dem zweiten Verbindungsträger und/oder der zweite Ausleger ist näher an dem zweiten Verbindungsträger angeordnet als an dem ersten Verbindungsträger. Damit kann insbesondere den Antriebseinheiten besonders viel Bauraum eingeräumt werden.

In einer weiteren Ausführungsvariante ist der obere Träger zur Anbindung an eine Lenkerkonstruktion zum Tragen der Fahrzeugachse ausgebildet, z.B. mittels einer Verschraubung an dem oberen Träger. Vorzugsweise ist der obere Träger zur Anbindung an einen Dreieckslenker ausgebildet und/oder zur Anbindung an einen Vierpunktlenker ausgebildet. Damit kann die Fahrzeugachse über den oberen Träger des Mittelteils an ein Fahrzeugchassis angelenkt werden.

In einem Ausführungsbeispiel weist der erste Verbindungsträger eine Ausnehmung und/oder eine C-Profilform auf, in der die erste Getriebeeinheit teilweise angeordnet ist. Alternativ oder zusätzlich weist der zweite Verbindungsträger eine Ausnehmung und/oder eine C-Profilform auf, in der die zweite Getriebeeinheit teilweise angeordnet ist. Durch die Ausnehmungen kann somit zusätzlicher Bauraum für die Getriebeeinheiten geschaffen werden.

Gemäß der Erfindung weist der Achskörper ferner einen ersten hohlprofilförmigen (zum Beispiel rohrförmigen) Körper und einen zweiten hohlprofilförmigen (zum Beispiel rohrförmigen) Körper auf, die zweckmäßig an entgegengesetzten Seiten mit dem Mittelteil (z.B. direkt) verbunden (zum Beispiel lösbar oder unlösbar) und jeweils zur Verbindung mit einer Federung, vorzugsweise einer Blattfederung oder einer Luftfederbalg-Federung, ausgebildet sind und/oder jeweils einen Bremsflansch aufweisen. Vorzugsweise weist der Achskörper ferner einen ersten, hohlen Achsstummel auf, der zur drehbaren Lagerung eines Rads ausgebildet und (z.B. direkt) mit dem ersten hohlprofilförmigen Körper verbunden ist, vorzugsweise mittels Einschrumpfen. Es ist auch möglich, dass der Achskörper ferner einen zweiten, hohlen Achsstummel aufweist, der zur drehbaren Lagerung eines Rads ausgebildet ist und (z.B. direkt) mit dem zweiten hohlprofilförmigen Körper verbunden ist, vorzugsweise mittels Einschrumpfen.

Zweckmäßig weist die Fahrzeugachse eine erste, zweckmäßig starre, Radwelle auf, die trieblich mit dem Abtrieb der ersten Getriebeeinheit verbunden ist und sich durch den ersten hohlprofilförmigen Körper und den ersten Achsstummel erstreckt. Die Fahrzeugachse kann ferner eine zweite, zweckmäßig starre, Radwelle aufweisen, die trieblich mit dem Abtrieb der zweiten Getriebeeinheit verbunden ist und sich durch den zweiten hohlprofilförmigen Körper und den zweiten Achsstummel erstreckt.

In einem Ausführungsbeispiel sind der Mittelteil, der erste hohlprofilförmige Körper und der zweite hohlprofilförmige Körper integral-einstückig hergestellt, vorzugsweise als eine Gusskonstruktion, eine Schmiedekonstruktion, eine Klebekonstruktion, eine Schweißkonstruktion oder eine mittels additivem Fertigungsverfahrens hergestellte Konstruktion. Bspw. kann eine zweckmäßig einteilige Guss-, Schmiede- oder mittels additivem Fertigungsverfahren hergestellte Konstruktion aus dem Mittelteil, dem ersten hohlprofilförmigen Körper und dem zweiten hohlprofilförmigen Körper in der Serienproduktion zuverlässig umzusetzen werden, eine Mehrzahl von Funktionen in sich integrieren und noch eine in der Montage des Kraftfahrzeugs handhabbare Masse aufweisen. Die Ausleger können bspw. nach der Herstellung des Gussteils mit dem Mittelteil verbunden werden, z. B. unlösbar mittels Schweißen oder Kleben oder lösbar mittel Verschrauben.

In einem weiteren Ausführungsbeispiel sind der erste Ausleger, der zweite Ausleger, der Mittelteil, der erste hohlprofilförmige Körper, der zweite hohlprofilförmige Körper, der erste, hohle Achsstummel und/oder der zweite, hohle Achsstummel zumindest teilweise integral-einstückig miteinander verbunden sind, vorzugsweise mittels Schweißen, Kleben, Gießen, Schmieden und/oder einem additiven Fertigungsverfahren, und/oder zumindest teilweise lösbar aneinander angebracht sind, vorzugsweise mittels Verschraubung. Somit kann je nach Anforderung eine gewünschte Konstruktionsweise gewählt werden.

In einer Ausführungsform weist die Fahrzeugachse ferner eine Schutzhaube auf, die vorzugsweise an dem ersten Ausleger und/oder dem zweiten Ausleger angebracht ist. Zweckmäßig kann die Schutzhaube die erste Antriebseinheit, die zweite Antriebseinheit, die erste Getriebeeinheit und/oder die zweite Getriebeeinheit zumindest teilweise oder vollständig umgeben.

In einer weiteren Ausführungsform sind die erste Antriebseinheit und die zweite Antriebseinheit von einem gemeinsamen Kühlsystem kühlbar, das die erste Antriebseinheit und die zweite Antriebseinheit fluidisch miteinander verbindet, vorzugsweise durch den Achskörper hindurch (z.B. durch den rahmenförmigen Mittelteil des Achskörpers hindurch).

Alternativ können die erste Antriebseinheit und die zweite Antriebseinheit beispielsweise separate Kühlsysteme aufweisen.

In einem Ausführungsbeispiel ist der Achskörper (z.B. der Mittelteil des Achskörpers) so ausgebildet, dass der Abtrieb der ersten Getriebeeinheit und der Abtrieb der zweiten Getriebeeinheit trieblich miteinander verbindbar sind. Es ist möglich, dass der Abtrieb der ersten Getriebeeinheit und der Abtrieb der zweiten Getriebeeinheit trieblich miteinander verbindbar sind, vorzugsweise über eine schaltbare Kupplung im Achskörper (zum Beispiel im Mittelteil des Achskörpers).

Die vorliegende Erfindung betrifft auch ein Kraftfahrzeug, vorzugsweise ein Nutzfahrzeug (zum Beispiel Lastkraftwagen oder Omnibus), mit einer Fahrzeugachse wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer beispielhaften Fahrzeugachse gemäß der vorliegenden Offenbarung; und
- Figur 2: eine (Quer-) Seitenansicht der beispielhaften Fahrzeugachse;
- Figur 3: eine (Längs-) Seitenansicht der beispielhaften Fahrzeugachse; und
- Figur 4: eine Draufsicht auf die beispielhafte Fahrzeugachse mit schematisch ergänzten weiteren Komponenten (Antriebseinheiten, Getriebeeinheiten, Kupplungen, Kühlsystem, Schutzhaube).

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

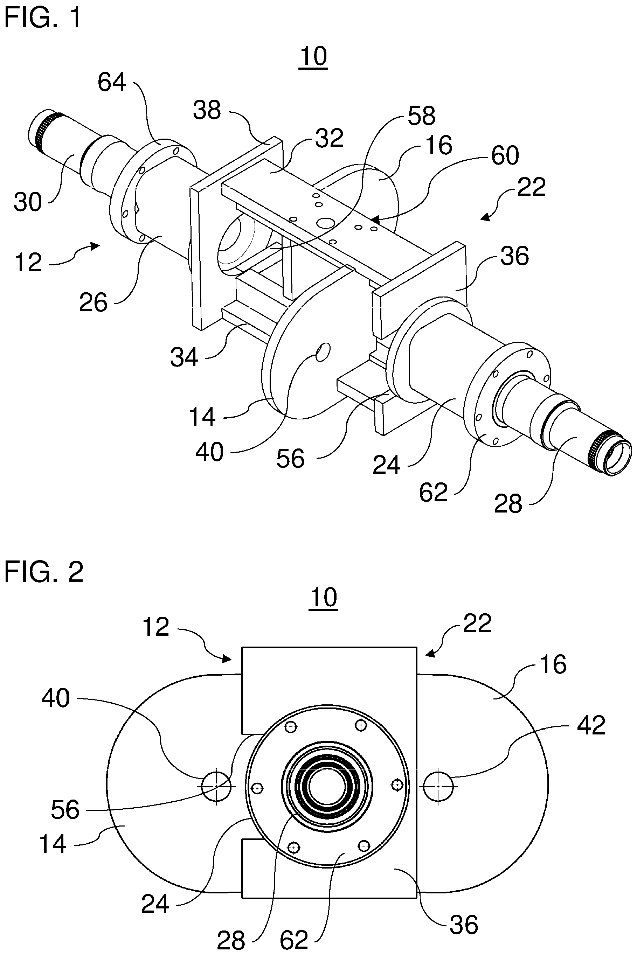

Die Figuren 1 bis 4 zeigen eine Fahrzeugachse 10 für leichte bis schwere Kraftfahrzeuge, wobei einige Teile wie Aufhängung, Räder, Bremsen usw. zur Verbesserung der Übersichtlichkeit nicht dargestellt sind. Vorzugsweise kann die Fahrzeugachse 10 für ein Nutzfahrzeug, zum Beispiel ein Lastkraftwagen oder ein Omnibus, verwendet werden. Zweckmäßig kann die Fahrzeugachse 10 als eine mit Elektroantrieben angetriebene Fahrzeugachse in einem Elektro- oder Hybrid-Kraftfahrzeug umfasst sein. Die Fahrzeugachse 10 ist zweckmäßig als Fahrzeugstarrachse ausgeführt.

Nachfolgend ist die Fahrzeugachse 10 unter Bezugnahme auf die Figuren 1 bis 4 näher beschrieben.

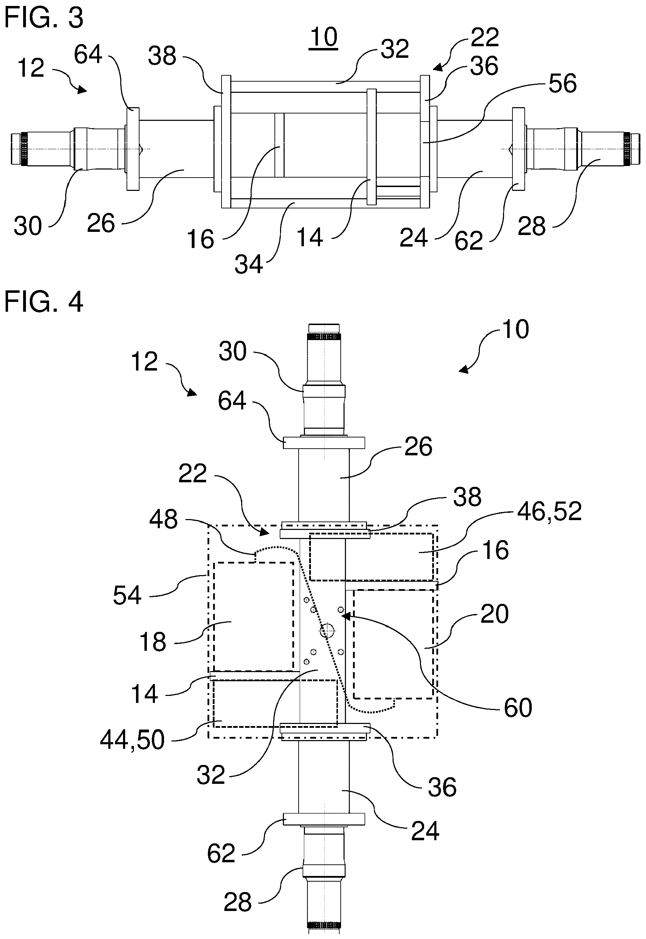

Die Fahrzeugachse 10 weist einen Achskörper 12, Ausleger 14, 16 und Antriebseinheiten 18, 20 (siehe Figur 4) auf.

Der Achskörper 12 kann einen Mittelteil 22, hohlprofilförmige Körper bzw. Achsbrückenrohre 24, 26 und Achsstummel 28, 30 aufweisen. Der Mittelteil 22 ist zentral bezüglich des Achskörpers 12 angeordnet. Beidseitig angrenzend an den Mittelteil 22 ist einer der hohlprofilförmigen Körper 24, 26 angeordnet. Der Mittelteil 22 und die Körper 24 und 26 bilden zusammen eine Achsbrücke. An ihren jeweiligen Außenseiten sind die Körper 24 und 26 mit je einem Achsstummel 28 oder 30 verbunden. Der Mittelteil 22, die Körper 24, 26 und die Achsstummel 28, 30 können entlang einer geometrischen Längsachse des Achskörpers 12 ausgerichtet sein. Die Längsachse des Achskörpers 12 ist eine Querachse des Kraftfahrzeugs.

Der Mittelteil 22 kann beispielsweise rahmenförmig (kastenförmig), vorzugsweise rechteckrahmenförmig (mit oder ohne abgerundete Ecken), sein. Aufgrund seiner Formgebung bietet der Mittelteil 22 genügend Eigensteifigkeit für die Fahrzeugachse 10. Somit ist es insbesondere nicht notwendig, dass an den Mittelteil 22 angebaute Komponenten (zum Beispiel die Antriebseinheiten 18, 20) zusätzliche Tragfunktionen für die Fahrzeugachse 10 übernehmen. Zur weiteren Erhöhung der Steifigkeit der Fahrzeugachse 10 ist es allerdings auch möglich, dass beispielsweise an den Mittelteil 22 angebaute Komponenten zusätzliche Tragfunktionen für die Fahrzeugachse 10 übernehmen, auch wenn dies hierin nicht gesondert dargestellt ist. D.h., je nach Anforderung können beispielsweise Antriebseinheiten und/oder Getriebeeinheiten nicht, nur in Teilfunktionen oder ganzheitlich in die Tragstruktur des Mittelteils 22 und/oder des Achskörpers 12 integriert sein.

Im Einzelnen kann der Mittelteil 22 beispielsweise einen oberen Träger 32, einen unteren Träger 34, einen ersten Verbindungsträger 36 und einen zweiten Verbindungträger 38 aufweisen. Der obere Träger 32 ist oberhalb des unteren Trägers 34 angeordnet. Die Träger 32 und 34 verlaufen parallel zur Längsachse des Achskörpers 12. Die Träger 32 und 34 sind zwischen den Verbindungsträgern 36, 38 angeordnet. Die Träger 32 und 34 sind voneinander entlang einer Hochachse des Achskörpers 12 beabstandet. Die Verbindungsträger 36 und 38 sind voneinander entlang der Längsachse des Achskörpers 12 beabstandet. Die Längsachse des Achskörpers 12 kann zweckmäßig als Normale zu den Verbindungsträgern 36 und 38 verlaufen. Die Verbindungsträger 36, 38 können vertikal ausgerichtet sein. Die Träger 32, 34, 36 und 38 bilden ein offenes Gestell. Der Mittelteil 22 bietet somit viel Bauraum, um flexibel unterschiedliche Varianten von Antriebseinheiten, Getriebeeinheiten und/oder Kupplungen in oder an den Mittelteil 22 zu montieren, je nach Anforderung an die Fahrzeugachse 10.

Die Träger 32, 34, 36 und 38 des Mittelteils 22 können integral-einstückig miteinander verbunden sein, zum Beispiel mittels Schweißen, Kleben, einem gemeinsamen Gießverfahren, einem gemeinsamen Schmiedeverfahren oder einem gemeinsamen additiven Fertigungsverfahren. Es ist allerdings auch möglich, dass die Träger 32, 34, 36 und 38 lösbar aneinander angebracht sind, zum Beispiel mittels Verschraubung.

Der erste Ausleger 14 und der zweite Ausleger 16 sind mit dem Mittelteil 22 zweckmäßig direkt verbunden. Die Verbindung kann lösbar, zum Beispiel mittels einer Verschraubung, oder unlösbar, zum Beispiel mittels Schweißen oder Kleben, sein. Es ist auch möglich, dass der erste Ausleger 14 und der zweite Ausleger 16 integral einstückig mit dem Mittelteil 22 ausgebildet ist, zum Beispiel mittels Gießen, Schmieden oder additivem Fertigungsverfahren.

Der erste Ausleger 14 erstreckt sich angewinkelt, vorzugsweise quer, zu der Längsachse des Achskörpers 12 weg von dem Mittelteil 22. Der zweite Ausleger 16 erstreckt sich angewinkelt, vorzugsweise quer, zu der Längsachse des Achskörpers 12 weg von dem Mittelteil 22. Beispielsweise können der erste Ausleger 14 und der zweite Ausleger 16 in einer Längsrichtung des Kraftfahrzeugs ausgerichtet sein. Der erste Ausleger 14 und der zweite Ausleger 16 sind auf gegenüberliegenden Seiten des Mittelteils 22 angeordnet. Der erste Ausleger 14 und der zweite Ausleger 16 können auf einer Höhe oder auf unterschiedlichen Höhen angeordnet sein. Der erste Ausleger 14 und/oder der zweite Ausleger 16 können auf einer Höhe mit dem Mittelteil 22 angeordnet sein, wie dargestellt ist. Es ist allerdings auch möglich, dass der erste Ausleger 14 und/oder der zweite Ausleger 16 über den Mittelteil 22 in einer Vertikalrichtung nach oben überstehen (zum Beispiel zum Erhöhen einer Bodenfreiheit des Kraftfahrzeugs) oder in der Vertikalrichtung nach unten überstehen (zum Beispiel zum Ermöglichen eines Niederflur-Kraftfahrzeugs) .

Der erste Ausleger 14 und der zweite Ausleger 16 sind außermittig bezüglich des Achskörpers 12 und des Mittelteils 22 angeordnet. Der erste Ausleger 14 ist näher an dem ersten Verbindungsträger 36 angeordnet als an dem zweiten Verbindungträger 38. Der zweite Ausleger 16 ist näher an dem zweiten Verbindungsträger 38 angeordnet als an dem ersten Verbindungträger 36. Der erste Ausleger 14 und der zweite Ausleger 16 sind bezüglich der Längsachse des Achskörpers 12 voneinander beabstandet angeordnet.

Der erste Ausleger 14 trägt die erste Antriebseinheit 18 (siehe Figur 4) an einer Stirnseite (Vorderseite) der ersten Antriebseinheit 18. Der zweite Ausleger 16 trägt die zweite Antriebseinheit 20 (siehe Figur 4) an einer Stirnseite der zweiten Antriebseinheit 20. Die erste Antriebseinheit 18 und die zweite Antriebseinheit 20 sind bezüglich der Längsachse des Achskörpers 12 miteinander überlappend angeordnet. Die Antriebseinheiten 18, 20 und der Achskörper 12 sind zumindest annähernd achsparallel zueinander angeordnet.

Die Antriebseinheiten 18, 20 können zweckmäßig elektrische Antriebseinheiten sein. Die Antriebseinheiten 18, 20 können jeweils im Wesentlichen nur von dem jeweiligen Ausleger 14 oder 16 getragen sein. Zweckmäßig kann an einer Rückseite der jeweiligen Antriebseinheiten 18, 20 keine feste Struktur des Achskörpers 12 vorhanden sein, sodass Antriebseinheiten unterschiedlicher Länge jeweils stirnseitig an den Ausleger 14, 16 angebracht werden können. Eine Abtriebswelle (nicht gesondert dargestellt) der ersten Antriebseinheit 18 kann sich durch ein zweckmäßig zentrales Durchgangsloch 40 des ersten Auslegers 14 erstrecken. Ebenso kann sich eine Abtriebswelle (nicht gesondert dargestellt) der zweiten Antriebseinheit 20 durch ein zweckmäßig zentrales Durchgangsloch 42 des zweiten Auslegers 16 erstrecken.

Die erste Antriebseinheit 18 und die zweite Antriebseinheit 20 teilen sich ein gemeinsames Kühlsystem 48 (siehe Figur 4). Über das Kühlsystem 48 sind die Antriebseinheiten 18, 20 fluidisch miteinander verbunden, zum Beispiel mittels einer Schlauchverbindung, wie dargestellt ist. Die Verbindung kann geschützt durch den Mittelteil 22 zwischen dem oberen Träger 32 und dem unteren Träger 34 verlaufen. Die jeweiligen Schlauchanschlüsse können beispielsweise an Stirnseiten (Rückseiten) der Antriebseinheiten 18, 20 angeordnet sein, wie dargestellt ist, oder beispielsweise an Mantelflächen der Antriebseinheiten 18, 20. Das Kühlsystem 48 kann dazu ausgebildet sein, nur die Antriebseinheiten 18, 20 zu kühlen oder auch zumindest eine weitere Komponente des Kraftfahrzeugs zu kühlen, zum Beispiel zumindest einen Inverter für die Antriebseinheiten 18, 20. Es ist allerdings auch möglich, dass die Antriebseinheiten 18, 20 separate Kühlsysteme aufweisen.

Der erste Ausleger 14 trägt eine erste Getriebeeinheit 44 (siehe Figur 4) an einer Stirnseite der ersten Getriebeeinheit 44. Der zweite Ausleger 16 trägt eine zweite Getriebeeinheit 46 (siehe Figur 4) an einer Stirnseite der zweiten Getriebeeinheit 46.

Die erste Antriebseinheit 18 und die erste Getriebeeinheit 44 sind auf entgegengesetzten Seiten des ersten Auslegers 14 angeordnet. Die zweite Antriebseinheit 20 und die zweite Getriebeeinheit 46 sind auf entgegengesetzten Seiten des zweiten Auslegers 16 angeordnet. Die erste Antriebseinheit 18 ist trieblich mit der ersten Getriebeeinheit 44 verbunden, zweckmäßig mittels der durch das Durchgangsloch 40 verlaufenden Abtriebswelle der ersten Antriebseinheit 18. Die zweite Antriebseinheit 20 ist trieblich mit der zweiten Getriebeeinheit 46 verbunden, zweckmäßig mittels der durch das Durchgangsloch 42 verlaufenden Abtriebswelle der zweiten Antriebseinheit 20. Zweckmäßig kann die erste Getriebeeinheit 44 im Wesentlichen nur von dem ersten Ausleger 14 und die zweite Getriebeeinheit 46 im Wesentlichen nur dem zweiten Ausleger 16 getragen sein. Auf einer dem ersten Ausleger 14 gegenüberliegenden (Stirn-) Seite der ersten Getriebeeinheit 44 ist zweckmäßig keine feste Struktur des Achskörpers 12 vorhanden, sodass Getriebeeinheit mit unterschiedlichen Längen und unterschiedlichen Übersetzungen jeweils stirnseitig an dem ersten Ausleger 14 angebracht werden können. Selbiges gilt für die Anordnung der zweiten Getriebeeinheit 46 am zweiten Ausleger 16.

Die erste Getriebeeinheit 44 weist ein Antriebselement koaxial zur ersten Antriebseinheit 18 und ein Abtriebselement koaxial zur Längsachse des Achskörpers 12 auf. Die zweite Getriebeeinheit 46 weist ein Antriebselement koaxial zur zweiten Antriebseinheit 20 und ein Abtriebselement koaxial zur Längsachse des Achskörpers 12 auf. Als Antriebselemente und Abtriebselemente der Getriebeeinheiten 44, 46 können beispielsweise Wellen oder Zahnräder umfasst sein. Die Getriebeeinheiten 44, 46 können beispielsweise als Stirnradgetriebe ausgeführt sein.

Es ist möglich, dass die Abtriebselemente der Getriebeeinheiten 44, 46 trieblich miteinander verbindbar sind, zum Beispiel unter Zwischenschaltung einer schaltbaren Kupplung (nicht dargestellt). Damit kann beispielsweise bei niedriger Last oder bei einer Fehlfunktion einer der Antriebseinheiten 18, 20 die Antriebsleistung beider durch die Fahrzeugachse 10 angetriebenen Räder durch nur eine der Antriebseinheiten 18, 20 bereitgestellt werden. Um die Anordnung einer betrieblichen Verbindung zwischen den Getriebeeinheiten 44, 46 zu ermöglichen, kann der Mittelteil 22 entsprechend ausgeführt sein, zum Beispiel rahmenförmig.

Die erste Getriebeeinheit 44 und/oder die zweite Getriebeeinheit 46 können starre oder schaltbare Getriebeeinheiten, zum Beispiel mit jeweils zwei Gängen, sein. Die Getriebeeinheiten 44, 46 können auch schaltbare Kupplungen 50, 52 (siehe Figur 4) aufweisen, wenn gewünscht. Zweckmäßig können die Getriebeeinheiten 44, 46 eine Übersetzung von i ≠ 1 aufweisen. Vorzugsweise sind die Getriebeeinheiten 44, 46 als Untersetzungsgetriebeeinheiten ausgeführt. Es ist allerdings auch möglich, dass die Getriebeeinheit 44, 46 eine Übersetzung von i = 1 aufweisen.

Die Ausleger 14, 16 können ferner zum Tragen einer oder mehrerer Schutzhauben 54 (siehe Figur 4) ausgebildet sein. Die Schutzhaube 54 kann ein- oder mehrteilig sein. Die Schutzhaube 54 kann die erste Antriebseinheit 18, die zweite Antriebseinheit 20, die erste Getriebeeinheit 44 und/oder die zweite Getriebeeinheit 46 zumindest teilweise schützend umgeben.

Die Außenkonturen der Ausleger 14, 16 können an die Außenkonturen der Antriebseinheiten 18, 20 und/oder die Außenkonturen der Getriebeeinheiten 44, 46 angepasst sein. Beispielsweise können die Außenkonturen abgerundet, vorzugsweise kreisbogenförmig, sein.

Um zusätzlichen Bauraum für die erste und zweite Getriebeeinheit 44, 46 zu schaffen, können die Verbindungsträger 36, 38 Ausnehmungen 56, 58 aufweisen. Die Getriebeeinheit 44, 46 können teilweise in den Ausnehmungen 56, 58 angeordnet sein. Die Verbindungsträger 36, 38 können beispielsweise eine offene C-Profilform aufweisen. Die Getriebeeinheiten 44, 46 können sich durch die offene Profilseite nach innen zur Längsachse des Achskörpers 12 hin erstrecken.

Der Achskörper 12 ist an verschiedene Aufhängungen anpassbar. Zweckmäßig ist der obere Träger 32 dazu ausgebildet, mit einer Lenkerkonstruktion zum Tragen der Fahrzeugachse 10 verbunden zu werden, um die Fahrzeugachse 10 mit einem Fahrgestell (Chassis) zu verbinden. Beispielsweise kann die Lenkerkonstruktion ein Dreieckslenker (z.B. in Y- oder V-Form) oder ein Vierpunktlenker (z.B. in H-Form) sein. Der obere Träger 32 kann Verschraubungspunkte 60 (z.B. für Lagerstellen) aufweisen, die so angeordnet sind, dass ein Dreieckslenker, ein Vierpunktlenker oder beides mit dem oberen Träger 32 verbindbar ist. Es ist auch möglich, beispielsweise einen Adapter (nicht dargestellt) an den Verschraubungspunkten 60 zu befestigen. Je nach gewählten Adapter können unterschiedliche Lenkerkonstruktionen zum Tragen der Fahrzeugachse 10 mit dem oberen Träger 32 verbunden werden. Durch das Konzept der Achsanlenkung kann die Anbindung an verschiedene Fahrgestelle realisiert werden.

An den hohlprofilförmigen Körpern 24, 26 ist eine Federung (zum Beispiel Blattfederung oder Luftfederbälgen-Federung) und/oder eine Lenkerkonstruktion angebracht sein, um die Fahrzeugachse 10 mit einem Fahrgestell (Chassis) zu verbinden. Alternativ oder zusätzlich können die hohlprofilförmigen Körper 24, 26jeweils einen Bremsflansch 62, 64 zur Anbringung einer Bremsvorrichtung für das jeweils zugeordnete Rad aufweisen. Zweckmäßig können die Bremsflansche 62, 64 ringförmig ausgeführt sein. Die Bremsflansche 62, 64 können an Außenseiten (Seiten entgegengesetzt zu den Verbindungsträgern 36 oder 38) der hohlprofilförmigen Körper 24, 26 angeordnet sein. Die hohlprofilförmigen Körper 24, 26 können integral-einstückig mit dem Mittelteil 22 verbunden sein, z.B. mittels Schweißen oder Kleben. Die hohlprofilförmigen Körper 24, 26 können bspw. auch gemeinsam mit dem Mittelteil 22 gegossen, geschmiedet oder in einem additiven Fertigungsverfahren hergestellt sein. Es ist auch möglich, dass die hohlprofilförmigen Körper 24, 26 lösbar an dem Mittelteil 22 angebracht sind, zum Beispiel mittels Verschraubung.

Auf den Achsstummeln 28, 30 können Radnaben (nicht dargestellt) der Fahrzeugachse 10 drehbar gelagert sein. Zum Antreiben der Radnaben können sich zweckmäßig starre Radwellen jeweils durch die hohlprofilförmigen Körper 24, 26 und die Achsstummel 28, 30 erstrecken. Die Achsstummel 28, 30 können unlösbar mit den hohlprofilförmigen Körpern 24, 26 verbunden sein, zum Beispiel mittels Einschrumpfen in die hohlprofilförmigen Körper 24, 26. Es ist auch möglich, die Achsstummel 28, 30 beispielsweise lösbar an den hohlprofilförmigen Körpern 24, 26 anzubringen. Die Achsstummel 28, 30 können, wenn gewünscht, auch Rad-Au-ßenplaneten tragen, um eine (weitere) Übersetzung/Untersetzung zu realisieren.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich der beigefügten Ansprüche fallen.

Alle Bereichsangaben hierin sind derart offenbart zu verstehen, dass gleichsam alle in den jeweiligen Bereich fallenden Werte einzeln offenbart sind, z.B. auch als jeweils bevorzugte engere Außengrenzen des jeweiligen Bereichs.

### Bezugszeichenliste

- 10: Fahrzeugachse
- 12: Achskörper
- 14: Erster Ausleger
- 16: Zweiter Ausleger
- 18: Erste Antriebseinheit
- 20: Zweite Antriebseinheit
- 22: Mittelteil
- 24: Erster hohlprofilförmiger Körper (erstes Achsbrückenrohr)
- 26: Zweiter hohlprofilförmiger Körper (erstes Achsbrückenrohr)
- 28: Erster Achsstummel
- 30: Zweiter Achsstummel
- 32: Oberer Träger
- 34: Unterer Träger
- 36: Erster Verbindungsträger
- 38: Zweiter Verbindungsträger
- 40: Durchgangsloch
- 42: Durchgangsloch
- 44: Erste Getriebeeinheit
- 46: Zweite Getriebeeinheit
- 48: Kühlsystem
- 50: Erste Kupplung
- 52: Zweite Kupplung
- 54: Schutzhaube
- 56: Ausnehmung
- 58: Ausnehmung
- 60: Verschraubungspunkte
- 62: Bremsflansch
- 64: Bremsflansch

## Patentansprüche

1. Fahrzeugachse (10) für ein Kraftfahrzeug, vorzugsweise ein Nutzfahrzeug, aufweisend:
einen Achskörper (12) mit einer Längsachse;
einen ersten Ausleger (14), der mit dem Achskörper (12) verbunden ist und sich angewinkelt, vorzugsweise quer, zu der Längsachse des Achskörpers (12) weg von dem Achskörper (12) erstreckt;
einen zweiten Ausleger (16), der mit dem Achskörper (12) verbunden ist und sich angewinkelt, vorzugsweise quer, zu der Längsachse des Achskörpers (12) weg von dem Achskörper (12) erstreckt;
eine erste, vorzugsweise elektrische, Antriebseinheit (18), die stirnseitig an dem ersten Ausleger (14) angebracht ist; und
eine zweite, vorzugsweise elektrische, Antriebseinheit (20), die stirnseitig an dem zweiten Ausleger (16) angebracht ist, wobei die erste Antriebseinheit (18) und die zweite Antriebseinheit (20) bezüglich der Längsachse des Achskörpers (12) überlappend und zumindest annähernd achsparallel zueinander und zu der Längsachse des Achskörpers (12) angeordnet sind;
wobei der Achskörper (12) einen Mittelteil (22) aufweist, mit dem der erste Ausleger (14) und der zweite Ausleger (16) verbunden sind; und
**dadurch gekennzeichnet, dass** der Achskörper (12) ferner aufweist:
einen ersten hohlprofilförmigen Körper (24) und einen zweiten hohlprofilförmigen Körper (26), die an entgegengesetzten Seiten mit dem Mittelteil (22) verbunden und jeweils zur Verbindung mit einer Federung, vorzugsweise einer Blattfederung oder einer Luftfederbalg-Federung, ausgebildet sind und/oder jeweils einen Bremsflansch aufweisen.

2. Fahrzeugachse (10) nach Anspruch 1, wobei:
die erste Antriebseinheit (18) nur von dem ersten Ausleger (14) getragen ist; und
die zweite Antriebseinheit (20) nur von dem zweiten Ausleger (16) getragen ist.

3. Fahrzeugachse (10) nach Anspruch 1 oder Anspruch 2, ferner aufweisend:
eine erste, vorzugsweise starre oder in mehreren Gängen schaltbare, Getriebeeinheit (44), die trieblich mit der ersten Antriebseinheit (18) verbunden ist, stirnseitig an dem ersten Ausleger (14) gegenüberliegend zu der ersten Antriebseinheit (18) angebracht ist und einen Abtrieb koaxial mit der Längsachse des Achskörpers (12) aufweist, wobei vorzugsweise die erste Getriebeeinheit (44) nur von dem ersten Ausleger (14) getragen ist; und
eine zweite, vorzugsweise starre oder in mehreren Gängen schaltbare, Getriebeeinheit (46), die trieblich mit der zweiten Antriebseinheit (20) verbunden ist, stirnseitig an dem zweiten Ausleger (16) gegenüberliegend zu der zweiten Antriebseinheit (20) angebracht ist und einen Abtrieb koaxial mit der Längsachse des Achskörpers (12) aufweist, wobei vorzugsweise die zweite Getriebeeinheit (46) nur von dem zweiten Ausleger (16) getragen ist,
wobei vorzugsweise:
die erste Getriebeeinheit (44) und/oder die zweite Getriebeeinheit (46) eine schaltbare Kupplung (50, 52) aufweist.

4. Fahrzeugachse (10) nach einem der vorherigen Ansprüche, wobei:
der erste Ausleger (14) und/oder der zweite Ausleger (16) ein Durchgangsloch (40, 42) zur Durchführung einer Abtriebswelle der jeweils getragenen Antriebseinheit (18, 20) aufweist; und/oder
der erste Ausleger (14) und/oder der zweite Ausleger (16) plattenförmig ausgebildet ist, vorzugsweise mit einer Außenkontur, die an eine Außenkontor der jeweils getragenen Antriebseinheit (18, 20) angepasst ist, besonders bevorzugt mit einer abgerundeten und/oder kreisbogenförmigen Außenkontur.

5. Fahrzeugachse (10) nach einem der vorherigen Ansprüche, wobei:
- der Mittelteil (22) rahmenförmig, vorzugsweise rechteckrahmenförmig, ist; und/oder
- der Mittelteil (22) als ein offenes Gestell ausgebildet ist; und/oder
- der Mittelteil (22) als eine Gusskonstruktion, eine Schmiedekonstruktion, eine Klebekonstruktion, eine Schweißkonstruktion oder eine mittels additivem Fertigungsverfahrens hergestellte Konstruktion ausgeführt ist.

6. Fahrzeugachse (10) nach einem der vorherigen Ansprüche, wobei der Mittelteil (22) aufweist:
einen oberen, vorzugsweise plattenförmigen, Träger (32);
einen unteren, vorzugsweise plattenförmigen, Träger (34);
einen ersten, vorzugsweise plattenförmigen, Verbindungsträger (36), der den oberen Träger (32) und unteren Träger (34) miteinander verbindet; und
einen zweiten, vorzugsweise plattenförmigen, Verbindungsträger (38), der den oberen Träger (32) und unteren Träger (34) miteinander verbindet,
wobei vorzugsweise:
- der obere Träger (32) und der untere Träger (34) zwischen dem ersten Verbindungsträger (36) und zweiten Verbindungsträger (38) angeordnet sind.

7. Fahrzeugachse (10) nach Anspruch 6, wobei:
der erste Ausleger (14) und der zweite Ausleger (16) mit dem oberen Träger (32) und dem unteren Träger (34) verbunden sind; und/oder
der erste Ausleger (14) und der zweite Ausleger (16) beabstandet zu dem ersten Verbindungsträger (36) und dem zweiten Verbindungsträger (38) angeordnet sind; und/oder
der erste Ausleger (14) näher an dem ersten Verbindungsträger (36) angeordnet ist als an dem zweiten Verbindungsträger (38) und der zweite Ausleger (16) näher an dem zweiten Verbindungsträger (38) angeordnet ist als an dem ersten Verbindungsträger (36).

8. Fahrzeugachse (10) nach Anspruch 6 oder 7, wobei:
der obere Träger (32) zur Anbindung an eine Lenkerkonstruktion zum Tragen der Fahrzeugachse (10) ausgebildet ist,
wobei vorzugsweise:
- der obere Träger (32) zur Anbindung an einen Dreieckslenker ausgebildet ist; und/oder
- der obere Träger (32) zur Anbindung an einen Vierpunktlenker ausgebildet ist.

9. Fahrzeugachse (10) nach einem der Ansprüche 6 bis 8, wobei:
der erste Verbindungsträger (36) eine Ausnehmung (56) und/oder eine C-Profilform aufweist, in der die erste Getriebeeinheit (44) teilweise angeordnet ist; und
der zweite Verbindungsträger (38) eine Ausnehmung (58) und/oder eine C-Profilform aufweist, in der die zweite Getriebeeinheit (46) teilweise angeordnet ist.

10. Fahrzeugachse (10) nach einem der vorherigen Ansprüche, wobei der Achskörper (12) ferner aufweist:
- einen ersten, hohlen Achsstummel (28), der zur drehbaren Lagerung eines Rads ausgebildet und mit dem ersten hohlprofilförmigen Körper (24) verbunden ist, vorzugsweise mittels Einschrumpfen; und/oder
- einen zweiten, hohlen Achsstummel (30), der zur drehbaren Lagerung eines Rads ausgebildet ist und mit dem zweiten hohlprofilförmigen Körper (26) verbunden ist, vorzugsweise mittels Einschrumpfen.

11. Fahrzeugachse (10) nach Anspruch 10, wobei:
der Mittelteil (22), der erste hohlprofilförmige Körper (24) und der zweite hohlprofilförmige Körper (26) integral-einstückig hergestellt sind, vorzugsweise als eine Gusskonstruktion, eine Schmiedekonstruktion, eine Klebekonstruktion, eine Schweißkonstruktion oder eine mittels additivem Fertigungsverfahrens hergestellte Konstruktion; oder
der erste Ausleger (14), der zweite Ausleger (16), der Mittelteil (22), der erste hohlprofilförmige Körper (24), der zweite hohlprofilförmige Körper (26), der erste, hohle Achsstummel (28) und/oder der zweite, hohle Achsstummel (30) zumindest teilweise integral-einstückig miteinander verbunden sind, vorzugsweise mittels Schweißen, Kleben, Gießen, Schmieden und/oder einem additiven Fertigungsverfahren, und/oder zumindest teilweise lösbar aneinander angebracht sind, vorzugsweise mittels Verschraubung.

12. Fahrzeugachse (10) nach einem der vorherigen Ansprüche, ferner aufweisend:
eine Schutzhaube (54), die an dem ersten Ausleger (14) und/oder dem zweiten Ausleger (16) angebracht ist und vorzugsweise die erste Antriebseinheit (18), die zweite Antriebseinheit (20), die erste Getriebeeinheit (44) und/oder die zweite Getriebeeinheit (46) zumindest teilweise oder vollständig umgibt.

13. Fahrzeugachse (10) nach einem der vorherigen Ansprüche, wobei:
die erste Antriebseinheit (18) und die zweite Antriebseinheit (20) von einem gemeinsamen Kühlsystem (48) kühlbar sind, das die erste Antriebseinheit (18) und die zweite Antriebseinheit (20) fluidisch miteinander verbindet, vorzugsweise durch den Achskörper (12) hindurch; oder
die erste Antriebseinheit (18) und die zweite Antriebseinheit (20) separate Kühlsysteme aufweisen.

14. Fahrzeugachse (10) nach einem der Ansprüche 3 bis 13, wobei:
der Achskörper (12) so ausgebildet ist, dass der Abtrieb der ersten Getriebeeinheit (44) und der Abtrieb der zweiten Getriebeeinheit (46) trieblich miteinander verbindbar sind; und/oder
der Abtrieb der ersten Getriebeeinheit (44) und der Abtrieb der zweiten Getriebeeinheit (46) trieblich miteinander verbindbar sind, vorzugsweise über eine schaltbare Kupplung im Achskörper (12).

15. Kraftfahrzeug, vorzugsweise Nutzfahrzeug, mit einer Fahrzeugachse (10) nach einem der vorherigen Ansprüche.

## Claims

1. Vehicle axle (10) for a motor vehicle, preferably a commercial vehicle, comprising:
an axle body (12) with a longitudinal axis;
a first arm (14), which is connected to the axle body (12) and which extends away from the axle body (12) angled, preferably transversely, to the longitudinal axis of the axle body (12);
a second arm (16), which is connected to the axle body (12) and which extends away from the axle body (12) angled, preferably transversely, to the longitudinal axis of the axle body (12);
a first, preferably electric, drive unit (18), which is endsidely mounted at the first arm (14); and
a second, preferably electric, drive unit (20), which is endsidely mounted at the second arm (16), wherein the first drive unit (18) and the second drive unit (20) are arranged overlapping with respect to the longitudinal axis of the axle body (12) and at least approximately axially parallel to each other and to the longitudinal axis of the axle body (12);
wherein the axle body (12) comprises a central portion (22) to which the first arm (14) and the second arm (16) are connected; and
**characterised in that** the axle body (12) further comprises:
a first hollow profile body (24) and a second hollow profile body (26) connected at opposite sides to the central portion (22) and each configured for connection to a suspension, preferably a leaf spring suspension or an air bellow suspension, and/or each comprising a brake flange.

2. Vehicle axle (10) according to claim 1, wherein:
the first drive unit (18) is supported only by the first arm (14); and
the second drive unit (20) is supported only by the second arm (16).

3. Vehicle axle (10) according to claim 1 or claim 2, further comprising:
a first, preferably rigid or in several gears shiftable, transmission unit (44), which is drivingly connected to the first drive unit (18), which is endsidely mounted at the first arm (14) opposite to the first drive unit (18) and which comprises an output coaxial with the longitudinal axis of the axle body (12), wherein preferably the first transmission unit (44) is supported only by the first arm (14); and
a second, preferably rigid or in several gears shiftable, transmission unit (46), which is drivingly connected to the second drive unit (20), which is endsidely mounted at the second arm (16) opposite to the second drive unit (20) and which comprises an output coaxial with the longitudinal axis of the axle body (12), wherein preferably the second transmission unit (46) is supported only by the second arm (16),
wherein preferably:
the first transmission unit (44) and/or the second transmission unit (46) comprises a shiftable clutch (50, 52).

4. Vehicle axle (10) according to any one of the preceding claims, wherein:
the first arm (14) and/or the second arm (16) comprises a through hole (40, 42) for the passage of an output shaft of the respectively supported drive unit (18, 20); and/or
the first arm (14) and/or the second arm (16) is plate-shaped, preferably with an outer contour which is adapted to an outer contour of the respectively supported drive unit (18, 20), particularly preferably with a rounded and/or circular arc-shaped outer contour.

5. Vehicle axle (10) according to any one of the preceding claims, wherein:
- the central portion (22) is frame-shaped, preferably rectangular frame-shaped; and/or
- the central portion (22) is configured as an open frame; and/or
- the central portion (22) is configured as a cast construction, a forged construction, a bonded construction, a welded construction or a construction manufactured by means of an additive manufacturing process.

6. Vehicle axle (10) according to any one of the preceding claims, wherein the central portion (22) comprises:
an upper, preferably plate-shaped, carrier (32);
a lower, preferably plate-shaped, carrier (34);
a first, preferably plate-shaped, connecting carrier (36) connecting said upper carrier (32) and lower carrier (34) to each other; and
a second, preferably plate-shaped, connecting carrier (38) connecting the upper carrier (32) and lower carrier (34) to each other,
wherein preferably:
the upper carrier (32) and the lower carrier (34) are arranged between the first connecting carrier (36) and second connecting carrier (38).

7. Vehicle axle (10) according to claim 6, wherein:
the first arm (14) and the second arm (16) are connected to the upper carrier (32) and the lower carrier (34); and/or
the first arm (14) and the second arm (16) are spaced apart from the first connection carrier (36) and the second connection carrier (38); and/or
the first arm (14) is located closer to the first connection carrier (36) than to the second connection carrier (38) and the second arm (16) is located closer to the second connection carrier (38) than to the first connection carrier (36).

8. Vehicle axle (10) according to claim 6 or 7, wherein:
the upper carrier (32) is configured to be connected to a steering structure for supporting the vehicle axle (10),
wherein preferably:
- the upper carrier (32) is configured to be connected to a wishbone; and/or
- the upper carrier (32) is configured to be connected to a four-point link.

9. Vehicle axle (10) according to any one of claims 6 to 8, wherein:
the first connection carrier (36) comprises a recess (56) and/or a C-profile shape in which the first transmission unit (44) is partially arranged; and
the second connection carrier (38) comprises a recess (58) and/or a C-profile shape in which the second transmission unit (46) is partially arranged.

10. Vehicle axle (10) according to any one of the preceding claims, wherein the axle body (12) further comprises:
- a first hollow axle stub (28) configured for rotatably supporting a wheel and connected to the first hollow profile body (24), preferably by means of shrink-fitting; and/or
- a second, hollow axle stub (30), configured for rotatably supporting a wheel and connected to the second hollow profile body (26), preferably by means of shrink-fitting.

11. Vehicle axle (10) according to claim 10, wherein:
the central portion (22), the first hollow profile body (24), and the second hollow profile body (26) being integrally-manufactured, preferably as a cast construction, a forged construction, a bonded construction, a welded construction, or a construction manufactured by an additive manufacturing process; or
the first arm (14), the second arm (16), the central portion (22), the first hollow profile body (24), the second hollow profile body (26), the first hollow axle stub (28) and/or the second hollow axle stub (30) are at least partially integrally connected to each other, preferably by means of welding, bonding, casting, forging and/or an additive manufacturing process, and/or are at least partially detachably attached to each other, preferably by means of a screw connection.

12. Vehicle axle (10) according to any one of the preceding claims, further comprising:
a protective hood (54), which is attached to the first arm (14) and/or the second arm (16) and which preferably at least partially or completely surrounds the first drive unit (18), the second drive unit (20), the first transmission unit (44) and/or the second transmission unit (46).

13. Vehicle axle (10) according to any one of the preceding claims, wherein:
the first drive unit (18) and the second drive unit (20) are coolable by a common cooling system (48), which fluidically connects the first drive unit (18) and the second drive unit (20), preferably through the axle body (12); or
the first drive unit (18) and the second drive unit (20) comprise separate cooling systems.

14. Vehicle axle (10) according to one of claims 3 to 13, wherein:
the axle body (12) is configured such that the output of the first transmission unit (44) and the output of the second transmission unit (46) are drivingly connectable to each other; and/or
the output of the first transmission unit (44) and the output of the second transmission unit (46) are drivingly connectable to one another, preferably via a switchable clutch in the axle body (12).

15. Motor vehicle, preferably commercial vehicle, with a vehicle axle (10) according to any of the previous claims.

## Revendications

1. Essieu de véhicule (10) pour un véhicule automobile, de préférence un véhicule utilitaire, possédant :
un corps d'essieu (12) pourvu d'un axe longitudinal ;
un premier avant-bras (14), qui est relié au corps d'essieu (12) et qui s'étend à l'écart du corps d'essieu (12) de manière angulaire, de préférence transversalement, par rapport à l'axe longitudinal du corps d'essieu (12) ;
un deuxième avant-bras (16) qui est relié au corps d'essieu (12) et qui s'étend à l'écart du corps d'essieu (12) de manière angulaire, de préférence transversalement, par rapport à l'axe longitudinal du corps d'essieu (12) ;
une première unité d'entraînement (18), de préférence électrique, qui est montée du côté frontal sur le premier avant-bras (14) ; et
une deuxième unité d'entraînement (20), de préférence électrique, qui est montée du côté frontal sur le deuxième avant-bras (16), la première unité d'entraînement (18) et la deuxième unité d'entraînement (20) étant disposées en chevauchement par rapport à l'axe longitudinal du corps d'essieu (12) et au moins approximativement axialement parallèles l'une à l'autre et par rapport à l'axe longitudinal du corps d'essieu (12) ;
le corps d'essieu (12) possédant une partie centrale (22) avec laquelle sont reliés le premier avant-bras (14) et le deuxième avant-bras (16) ; et
**caractérisé en ce que** le corps d'essieu (12) possède en outre :
un premier corps en forme de profil creux (24) et un deuxième corps en forme de profil creux (26), qui sont reliés à la partie centrale (22) à des côtés opposés et sont respectivement configurés pour une liaison avec une suspension, de préférence une suspension à lames ou une suspension pneumatique et/ou possèdent respectivement une bride de frein.

2. Essieu de véhicule (10) selon la revendication 1, avec lequel :
la première unité d'entraînement (18) est seulement portée par le premier avant-bras (14) ; et
la deuxième unité d'entraînement (20) est seulement portée par le deuxième avant-bras (16).

3. Essieu de véhicule (10) selon la revendication 1 ou la revendication 2, possédant en outre :
une première unité de transmission (44), de préférence fixe ou commutable en plusieurs rapports, qui est reliée cinématiquement à la première unité d'entraînement (18), est montée du côté frontal sur le premier avant-bras (14) à l'opposé de la première unité d'entraînement (18) et possède une prise de force coaxiale avec l'axe longitudinal du corps d'essieu (12), la première unité de transmission (44) n'étant de préférence portée que par le premier avant-bras (14) ; et
une deuxième unité de transmission (46), de préférence fixe ou commutable en plusieurs rapports, qui est reliée cinématiquement à la deuxième unité d'entraînement (20), est montée du côté frontal sur le deuxième avant-bras (16) à l'opposé de la deuxième unité d'entraînement (20) et possède une prise de force coaxiale avec l'axe longitudinal du corps d'essieu (12), la deuxième unité de transmission (46) n'étant de préférence portée que par le deuxième avant-bras (16),
avec de préférence :
la première unité de transmission (44) et/ou la deuxième unité de transmission (46) possédant un embrayage (50, 52) débrayable.

4. Essieu de véhicule (10) selon l'une des revendications précédentes, avec lequel :
le premier avant-bras (14) et/ou le deuxième avant-bras (16) possède un trou traversant (40, 42) servant à faire passer un arbre de sortie de l'unité d'entraînement (18, 20) respectivement portée ; et/ou
le premier avant-bras (14) et/ou le deuxième avant-bras (16) est configuré en forme de plaque, de préférence avec un contour extérieur qui est adapté à un contour extérieur de l'unité d'entraînement (18, 20) respectivement portée, particulièrement de préférence avec un contour extérieur arrondi et/ou en forme d'arc de cercle.

5. Essieu de véhicule (10) selon l'une des revendications précédentes, avec lequel :
- la partie centrale (22) est en forme de cadre, de préférence en forme de cadre rectangulaire ; et/ou
- la partie centrale (22) est réalisée sous la forme d'un bâti ouvert ; et/ou
- la partie centrale (22) est réalisée sous la forme d'une construction moulée, d'une construction forgée, d'une construction collée, d'une construction soudée ou d'une construction fabriquée au moyen d'un procédé de fabrication additive.

6. Essieu de véhicule (10) selon l'une des revendications précédentes, la partie centrale (22) possédant :
un élément porteur supérieur (32), de préférence en forme de plaque ;
un élément porteur inférieur (34), de préférence en forme de plaque ;
un premier élément porteur de liaison (36), de préférence en forme de plaque, qui relie ensemble l'élément porteur supérieur (32) et l'élément porteur inférieur (34) ; et
un deuxième élément porteur de liaison (38), de préférence en forme de plaque, qui relie ensemble l'élément porteur supérieur (32) et l'élément porteur inférieur (34),
avec de préférence :
- l'élément porteur supérieur (32) et/ou l'élément porteur inférieur (34) étant disposés entre le premier élément porteur de liaison (36) et le deuxième élément porteur de liaison (38).

7. Essieu de véhicule (10) selon la revendication 6, avec lequel :
le premier avant-bras (14) et le deuxième avant-bras (16) sont reliés à l'élément porteur supérieur (32) et à l'élément porteur inférieur (34) ; et/ou
le premier avant-bras (14) et le deuxième avant-bras (16) sont disposés espacés du premier élément porteur de liaison (36) et du deuxième élément porteur de liaison (38) ; et/ou
le premier avant-bras (14) est disposé plus proche du premier élément porteur de liaison (36) et du deuxième élément porteur de liaison (38) et le deuxième avant-bras (16) est disposé plus proche du deuxième élément porteur de liaison (38) et du premier élément porteur de liaison (36) .

8. Essieu de véhicule (10) selon la revendication 6 ou 7, avec lequel :
l'élément porteur supérieur (32) est configuré pour être rattaché à une construction de bras oscillant servant à porter l'essieu de véhicule (10),
avec de préférence :
- l'élément porteur supérieur (32) étant configuré pour être rattaché à un levier triangulaire ; et/ou
- l'élément porteur supérieur (32) étant configuré pour être rattaché à un bras oscillant à quatre points.

9. Essieu de véhicule (10) selon l'une des revendications 6 à 8, avec lequel :
le premier élément porteur de liaison (36) possède un creux (56) et/ou une forme profilée en C qui est disposé partiellement dans la première unité de transmission (44) ; et
le deuxième élément porteur de liaison (38) possède un creux (58) et/ou une forme profilée en C qui est disposé partiellement dans la deuxième unité de transmission (46).

10. Essieu de véhicule (10) selon l'une des revendications précédentes, le corps d'essieu (12) possédant en outre :
- une première fusée d'essieu (28) creuse, qui est configurée pour supporter à rotation une roue et qui est reliée au premier corps en forme de profil creux (24), de préférence par frettage ; et/ou
- une deuxième fusée d'essieu (30) creuse, qui est configurée pour supporter à rotation une roue et qui est reliée au deuxième corps en forme de profil creux (26), de préférence par frettage.

11. Essieu de véhicule (10) selon la revendication 10, avec lequel :
la partie centrale (22), le premier corps en forme de profil creux (24) et le deuxième corps en forme de profil creux (26) sont fabriqués intégralement d'un seul tenant, de préférence sous la forme d'une construction moulée, d'une construction forgée, d'une construction collée, d'une construction soudée ou d'une construction fabriquée au moyen d'un procédé de fabrication additive ; ou
le premier avant-bras (14), le deuxième avant-bras (16), la partie centrale (22), le premier corps en forme de profil creux (24), le deuxième corps en forme de profil creux (26), la première fusée d'essieu (28) creuse et/ou la deuxième fusée d'essieu (30) creuse sont reliés entre eux au moins partiellement intégralement d'un seul tenant, de préférence par soudage, collage, moulage, forgeage et/ou un procédé de fabrication additive et/ou sont montés les uns contre les autres au moins partiellement de manière amovible, de préférence par vissage.

12. Essieu de véhicule (10) selon l'une des revendications précédentes, possédant en outre :
un capot de protection (54), qui est monté sur le premier avant-bras (14) et/ou le deuxième avant-bras (16) et entoure de préférence la première unité d'entraînement (18), la deuxième unité d'entraînement (20), la première unité de transmission (44) et/ou la deuxième unité de transmission (46) au moins partiellement ou entièrement.

13. Essieu de véhicule (10) selon l'une des revendications précédentes, avec lequel :
la première unité d'entraînement (18) et la deuxième unité d'entraînement (20) peuvent être refroidies par un système de refroidissement (48) commun, qui relie la première unité d'entraînement (18) et la deuxième unité d'entraînement (20) fluidiquement entre elles, de préférence à travers le corps d'essieu (12) ; et
la première unité d'entraînement (18) et la deuxième unité d'entraînement (20) possèdent des systèmes de refroidissement séparés.

14. Essieu de véhicule (10) selon l'une des revendications 3 à 13, avec lequel :
le corps d'essieu (12) est configuré de telle sorte que la prise de force de la première unité de transmission (44) et la prise de force de la deuxième unité de transmission (46) peuvent être reliées cinématiquement l'une à l'autre ; et/ou
la prise de force de la première unité de transmission (44) et la prise de force de la deuxième unité de transmission (46) peuvent être reliées cinématiquement l'une à l'autre, de préférence par le biais d'un embrayage débrayable dans le corps d'essieu (12).

15. Véhicule automobile, de préférence un véhicule utilitaire, comprenant un essieu de véhicule (10) selon l'une des revendications précédentes.
